## Europäisches Patentamt

## European Patent Office

## Office européen des brevets

(19)

(11) Veröffentlichungsnummer: **0 168 444**
**B1**

## (12) EUROPÄISCHE PATENTSCHRIFT

(45) Veröffentlichungstag der Patentschrift:
**13.07.88**

(51) Int. Cl.⁴: **H 04 B 9/00,** G 02 B 6/28

(21) Anmeldenummer: **85900630.6**

(22) Anmeldetag: **09.01.85**

(86) Internationale Anmeldenummer:
**PCT/DE 85/00002**

(87) Internationale Veröffentlichungsnummer:
**WO 85/03179 (18.07.85** Gazette 85/16)

(54) **SCHALTUNG MIT OPTISCHEM BUS.**

(30) Priorität: **09.01.84 DE 3400480**

(43) Veröffentlichungstag der Anmeldung:
**22.01.86 Patentblatt 86/4**

(45) Bekanntmachung des Hinweises auf die Patenterteilung:
**13.07.88 Patentblatt 88/28**

(84) Benannte Vertragsstaaten:
**AT BE CH DE FR GB LI LU NL SE**

(56) Entgegenhaltungen:
**EP - A - 0 063 626**
**US - A - 3 189 744**
**US - A - 3 401 469**
**US - A - 4 076 375**
**US - A - 4 307 294**

**IEEE Transaction of Quantum Electronics, vol. QE-11, September 1975, New York (US), H. Nishihara et al.: "Holocoupler: A novel coupler for optical circuits", pp. 794-796**
**IBM Technical Disclosure Bulletin, vol. 26, no. 4, September 1983, New York (US), L. Balliet and D.V. Couden. "Optical transmission system for interconnecting electronic units", pp. 1973-1976**
**Patents Abstracts of Japan, vol. 6, no. 173, 7 September 1982, p. 1051E-129 , & JP-A-5788778 (TATEISHI) see abstract**

(73) Patentinhaber: **Hase, Klaus-Rüdiger, Dr., Südekumzeile 26 b, D-1000 Berlin 20 (DE)**

(72) Erfinder: **Hase, Klaus-Rüdiger, Dr., Südekumzeile 26 b, D-1000 Berlin 20 (DE)**

(74) Vertreter: **Schiller, Walter, Dr. et al, Kanzlei Münich, Steinmann, Schiller Willibaldstrasse 36-38, D-8000 München 21 (DE)**

## Beschreibung

Technisches Gebiet

Die Erfindung bezieht sich auf eine Schaltung mit auf einer Leiterplatte angeordneten Schaltkreisen, die über einen digitalen Bus miteinander verbunden sind.

Derartige Schaltungen werden beispielsweise in Datenverarbeitungsanlagen, Mikrocomputern, aber auch in sonstigen Digitalschaltungen, wie digitalen Vermittlungsschaltungen etc. verwendet. In diesen Schaltungen verbinden die als Bus bezeichneten Informationsübertragungskanäle aktive Schaltkreise, wie Zentraleinheiten (CPU), DM-Controller etc. und passive Schaltkreise wie Speicherbausteine (RAM, ROM etc.), E/A-Bausteine etc.

Stand der Technik

Die Übertragung von Informationen innerhalb der einzelnen Schaltungen erfolgt beim Stand der Technik praktisch ausschliesslich auf galvanischem Wege über elektrische Verbindungsleitungen. Da sich bei Rechnerbausteinen, wie CPU-Bausteinen, Speicherbausteinen etc., die Parallelverarbeitung von Daten- bzw. Adress-Worten durchgesetzt hat, sind die Informationsübertragungskanäle, d.h. der Bus als paralleles Leiterbahnsystem ausgeführt, so dass beispielsweise bei einem Mikroprozessor, der 16-Bit-Worte verarbeitet, 64 und mehr Anschlussleitungen erforderlich sind.

Man hat daher versucht, die Anzahl der Bus-Leitungen dadurch zu verringern, dass Datenwörter und Adresswörter über die selben Leitungen im Zeitmultiplex-Verfahren übertragen werden. Bei kleineren Systemen wurde auch der Bus seriell ausgelegt und auf zwei Leitungen (Daten- und Takt-Leitung) reduziert. Diese Multiplex-Verfahren haben jedoch ihre Grenzen, da sie – gleiche Verarbeitungsgeschwindigkeit vorausgesetzt – zu einer Erhöhung der Bandbreite für die Bus-Signale führen.

Zusätzlich zu dem durch die parallele Führung von Leiterbahnen sowie den dadurch erforderlichen Kontaktapparat von steckbaren Bausteinen bedingten Kosten ist folgender Gesichtspunkt zu beachten:

Digitale Schaltungen werden heute durchweg in Leiterplattentechnik gefertigt. In Anbetracht der durch die Anordnung der Bauelemente bedingten Topologie der einzelnen Bus-Leitungen muss man – auch mit Rücksicht auf die Flexibilität des Gesamtsystems – Kompromisse bezüglich der Gleichmässigkeit des Wellenwiderstandes der Leitungen und damit notwendigerweise auch der wellenwiderstandsmässigen Abschlüsse der Bus-Leitungen eingehen. Die dadurch verursachten Störungen und die Beeinflussungen durch ungenügende Abschirmungen gegenüber benachbarten Leiterbahnen führen bei der Vielzahl der erforderlichen Bus-Leitungen zu einer Begrenzung der nutzbaren Bandbreite und beschränken die Bus-Kanalkapazität insbesondere bei Mikrorechnern mit hoher Rechenleistung.

Ein Ersatz, der den Bus bildenden Verbindungsleitungen in Schaltungen beispielsweise durch optische Übertragungswege ist bislang aus folgendem Grunde in der Praxis noch nicht realisiert worden:

Die bisher bekannten Ankoppelungsprinzipien an Glasfasern, wie Sternkoppler, Ringsysteme mit Repeatern oder T-Strukturen beschränken entweder von vornherein die Anzahl der miteinander verbindbaren Schaltkreise oder sie setzen durch die Vergrösserung der Signallaufzeiten dem Datendurchsatz und den Antwortzeiten enge Grenzen. Darüberhinaus sind lösbare Ankoppelungen beispielsweise an Glasfasern für einzelne Schaltkreise nicht mit vertretbarem Kostenaufwand zu verwirklichen.

Aus der Druckschrift IBM Technical Disclosure Bulletin, Band 26, Seite 1793 ff. ist es zwar bekannt, eine Leiterplatte, auf der beispielsweise integrierte Schaltkreise angeordnet sein können, als Lichtleiterplatte auszubilden. Die Signale der einzelnen Schaltkreise werden über elektro-optische Wandlerelemente in die Lichtleiterplatte eingekoppelt und über opto-elektrische Wandlerelemente empfangen.

Die Lichtleiterplatte trägt eine Deckschicht, deren reell-wertiger Brechungsindex kleiner als der reellwertige Brechungsindex der Lichtleiterplatte ist, sodass die Lichtausbreitung in der Lichtleiterplatte in gleicher Weise wie in Glasfasern erfolgt.

Deshalb sind auch bei dieser bekannten Lichtleiterplatte sehr genaue «Ankoppelungsbedingungen» einzuhalten, die insbesondere eine Erweiterung und einen flexiblen Aufbau der Schaltung sehr erschweren.

Realisierungsvorschläge für optische Informationsübertragungen haben sich daher bislang auf die Zusammenschaltungen grösserer Multi-Prozessorsysteme beschränkt, bei denen die Entfernung der Subsysteme in der Grössenordnung von 10 bis 100 m liegen, nicht jedcoh auf die Verbindung einzelner Bauelemente auf einer Leiterplatte.

Darstellung der Erfindung

Der Erfindung liegt die Aufgabe zugrunde, eine Schaltung gemäss dem Oberbegriff des Patentanspruchs 1 derart weiterzubilden, dass einzelne Schaltkreise durch einen optischen Bus verbindbar sind.

Diese Aufgabe wird erfindungsgemäss durch die im kennzeichnenden Teil des Patentanspruchs 1 angegebenen Merkmale gelöst. Erfindungsgemäss ist erkannt worden, dass die bekannten Lichtleitersysteme, die auf dem Prinzip der Totalreflexion beruhen, zur Verbindung einzelner Schaltkreise in einer Schaltung nicht geeignet sind. Erfindungsgemäss ist deshalb als Leiterplatte, auf der die einzelnen Schaltkreise angeordnet sind, eine Lichtleiterplatte vorgesehen, auf deren Aussenflächen ein Grenzschichtmaterial mit einem beliebig komplexwertigen Brechungsindex, d.h. ein stark absorbierendes Grenzschichtmaterial aufgebracht ist. Derartige Grenzschichtmaterialien sind bei den bekannten Lichtleitersystemen nicht in Betracht gezogen worden.

Erfindungsgemäss ist aber erkannt worden, dass mit derartigen Grenzschichtmaterialien das Ein- und Auskoppeln von Licht, d.h. von elektromagnetischen Wellen vom nahen UV- bis zum Infrarotbereich, d.h. im üblicherweise zur Nachrichtenübertragung benutzten Bereich, in äusserst einfacher Weise möglich ist, da keine bestimmten Winkelbedingungen etc. eingehalten werden müssen. Aufgrund des komplexwertigen Brechungsindex, bei dem der Betrag des Imaginärsteils vorzugsweise grösser als der des Realteils ist, sind Reflexionen an den Aussenflächen unter allen Inzidenzwinkeln möglich.

Hierdurch wird die weiterhin in Anspruch 1 gekennzeichnete einfache Ankoppelung der Schaltkreise an die Lichtleiterplatte möglich: Zur Ankoppelung sind lediglich elektro-optische und opto-elektrische Wandlerelemente erforderlich, die in Koppelfenstern in dem Grenzschichtmaterial angeordnet sind.

Natürlich ist es möglich, auf dem optischen Bus (im folg. auch Optobus) Informationen, wie Daten- und/oder Adressignale parallel zu übertragen. Die Unterscheidung zwischen den einzelnen Bits der parallel übertragenen Informationen kann beispielsweise durch geeignete Modulation oder durch Licht unterschiedlicher Wellenlänge (Farbtrennung) erreicht werden, wobei jeder «Stelle» des parallelen Datenworts ein elektro-optisches und ein opto-elektrisches Wandlerelement zugeordnet ist.

Eine besonders einfache Ausgestaltung der erfindungsgemässen Schaltung mit optischem Bus ergibt sich jedoch nach Anspruch 2 dadurch, dass die Informationsübertragung auf dem Optobus seriell erfolgt. Bei den zur Zeit üblichen Transfergeschwindigkeiten von 0,5 ... 40 MByte/s ergeben sich serielle Übertragungsraten zwischen 500 und ca. 600 MBit/s. Da die erfindungsgemässe Lichtleiterplatte Transferraten bis zu mehreren GBit/s und darüber erlaubt, können nicht nur die zur Zeit üblichen Transfergeschwindigkeiten ohne weiteres mit serieller Übertragung erreicht werden, sondern die Transfergeschwindigkeit sogar noch wesentlich gesteigert werden.

Im Anspruch 3 ist eine besonders einfache Ankoppelung der einzelnen Schaltkreise angegeben, bei der einfach die elektro-optischen und die opto-elektrischen Wandlerelemente in Aussparungen in dem Grenzschichtmaterial eingesetzt werden. Mit den in den Ansprüchen 4 bis 11 angegebenen Massnahmen lässt sich der Ankoppelungsgrad, d.h. der Wirkungsgrad der Ein- und Auskoppelung von Licht gegenüber der im Anspruch 3 gekennzeichneten einfachen Ausbildung wesentlich erhöhen.

Die Ausbildung der erfindungsgemässen Schaltung gemäss Anspruch 12 erlaubt die Verbindung zu anderen Schaltungen, beispielsweise von einzelnen Leiterplatten in einem Rechner, der aus mehreren Leiterplatten aufgebaut ist, oder zu Endgeräten der hohen im Optobus erreichbaren Transfergeschwindigkeit anzupassen.

In Anspruch 13 ist eine einfache und kostengünstige Ankoppelung der Glasfaserkabel beansprucht.

Natürlich ist es möglich, die für das Arbeiten der einzelnen Schaltkreise erforderliche elektrische Energie ebenfalls über den Optobus zu transportieren. Insbesondere bei grossen Leiterplatten oder bei Schaltkreisen mit hohem Energieverbrauch ist es jedoch einfacher, auf der Lichtleiterplatte elektrische Leiter vorzusehen, mit denen die einzelnen Schaltkreise mit elektrischer Energie versorgt werden. Diese Leiterstreifen können zusätzlich zum Abführen der in den Schaltkreisen erzeugten Verlustwärme dienen.

Die verschiedenen zur Signalein- bzw. auskoppelung in die Lichtleiterplatte verwendeten Wandlerelemente können als getrennte Bauelemente ausgeführt werden, auf die beispielsweise handelsübliche integrierte Schaltkreise in Normgehäusen aufgesteckt werden können: Beispielsweise lassen sich die Wandler in «IC-Sockel» integrieren. Bei bevorzugten Ausführungsbeispielen sind jedoch die Wandler beispielsweise in IC-Gehäuse integriert oder in der Rückseite beispielsweise von Silizium-Plättchen ausgebildet, auf denen die integrierten Schaltungen, wie CPU etc., ausgebildet sind (Anspruch 16 und 17).

Die einfache Ein- und Auskoppelung von Licht, die durch die erfindungsgemässe Ausbildung der Lichtleiterplatte erreicht wird, erlaubt es ohne grossen Aufwand, die Schaltkreise abnehmbar an der Lichtleiterplatte anzubringen. Hierdurch und durch die serielle Signalübertragung wird es möglich, eine standardisierte Lichtleiterplatte für verschiedene Schaltungen dadurch zu verwenden, dass auf die einzelnen «Steckplätze» unterschiedliche Schaltkreise aufgesetzt werden.

Kurze Beschreibung der Zeichnung

Die Erfindung wird nachstehend anhand von Ausführungsbeispielen unter Bezugnahme auf die Zeichnung näher beschrieben, in der zeigen:

Fig. 1 schematisch eine erfindungsgemässe Schaltung mit Optobus,

Fig. 2 Einzelheiten aus Fig. 1,

Fig. 3 ein Impuls/Zeitdiagramm der Signalübertragung mittels Optobus,

Fig. 4a eine einfache Ankoppelung von opto-elektrischen und elektro-optischen Wandlerelementen,

Fig. 4b bis e Abstrahlcharakteristiken, die zu einem besseren Wirkungsgrad der Lichtübertragung führen,

Fig. 5a bis d Ausführungsbeispiele, mit denen Abstrahlcharakteristiken gemäss den Fig. 4b und c realisierbar sind

Fig. 6a bis 6c ein Ausführungsbeispiel einer erfindungsgemässen Schaltung, bei der die Lichtleiterplatte segmentiert ist, und

Fig. 7a und 7b die Ankoppelung von Glasfasern an eine erfindungsgemässe Lichtleiterplatte.

Wege zur Ausführung der Erfindung

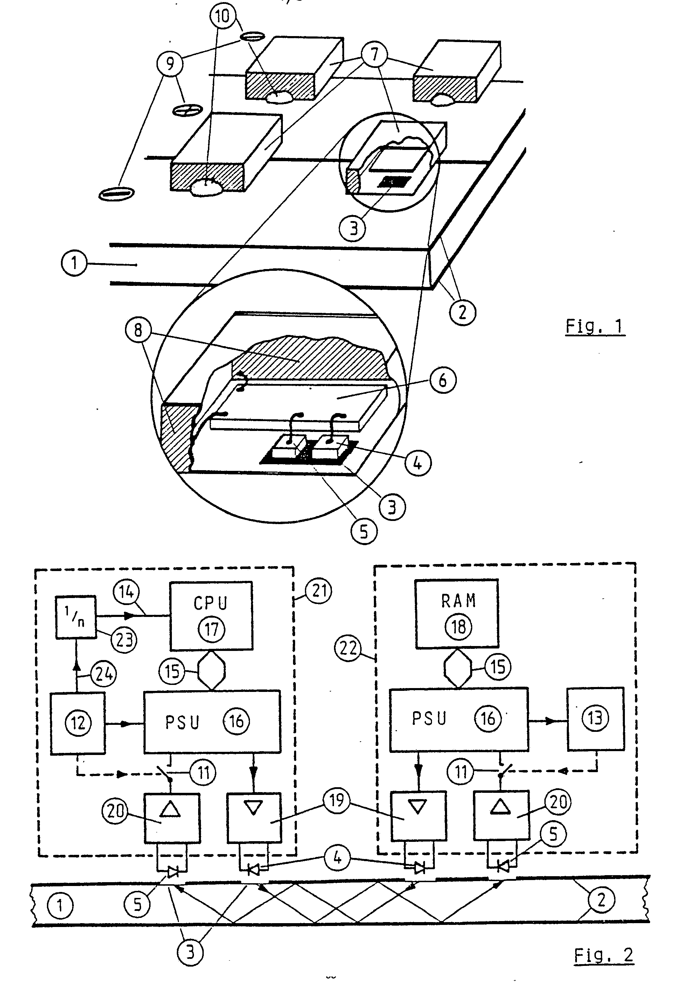

Fig. 1 zeigt ein Ausführungsbeispiel einer erfindungsgemässen Schaltung, bei der Schaltkreise 7 auf einer Leiterplatte 1 angeordnet sind. Die Leiterplatte 1 ist eine Lichtleiterplatte mit einem Brechungsindex $n_1$, die beidseitig mit einem Material 2 (im folgenden Grenzschichtmaterial genannt) beschichtet ist, das einen beliebig komplexwertigen Brechungsindex $n^*_2 = n_2 (1-jk)$ besitzt, dessen Realteil $n_2$ vorzugsweise kleiner als der Brechungsindex $n_1$ der Lichtleiterplatte 1 ist.

Das Grenzschichtmaterial 2 besitzt Aussparungen 3, die als Koppelfenster mittels elektro-optischer Wandler 4 und opto-elektrischer Wandler 5 eine Ein- bzw. Auskoppelung von Lichtsignalen in die Lichtleiterplatte ermöglichen.

Die einzelnen Wandler 4 und 5 sind jeweils Bestandteil eines Schaltkreises 7, der ferner einen handelsüblichen (Funktions-) Schaltkreis 6, beispielsweise eine CPU und Anschlüsse 8 für die Versorgung mit elektrischer Energie aufweist. Die elektrische Energie kann über breite Leiterstreifen 9, die auf der Grenzschicht 2 aufgetragen sind oder bei Verwendung von metallischen Grenzschichten Teil derselben sind, zugeführt werden, wobei gegebenenfalls anfallende Verlustleistungswärme auch über die breiten Leiterstreifen 9 abgeführt werden kann.

Die Lichtleiterplatte 1 kann beispielsweise aus einem optischen Glas oder einem üblicherweise für optische Zwecke verwendeten Kunststoffmaterial, beispielsweise dem unter dem Namen CR 39 vertriebenen Material bestehen. Die Dicke d der Lichtleiterplatte ist typischerweise 1 bis 5 mm. Dies wird später noch näher erläutert. Das Grenzschichtmaterial 2 kann beispielsweise aus einer 0,5 µm-Schicht Silber oder Aluminium bestehen, auf der aus Stabilitätsgründen eine 5 µm Kupferschicht aufgebracht ist.

Bei einer bevorzugten Ausgestaltung der Erfindung ist der Absorptionskoeffizient k des Grenzschichtmaterials 2 gross im Vergleich zum Verhältnis $n_2/n_1$ (der sog. relativen reellwertigen Brechzahl). Dann können für alle Einfallswinkel die Lichtstrahlen, die die elektro-optischen Wandler 4 aussenden, in der Lichtleiterplatte 1 geführt werden. Die Reflexionen an dem Grenzschichtmaterial 2 sind in diesem Falle in Abhängigkeit von der Polarisationsrichtung und dem Inzidenzwinkel grundsätzlich verlustbehaftet, die Lichtdämpfung ist aber bei geringer Absorption des Materials der Lichtleiterplatte 1, geeigneter Wahl des Grenzschichtmaterials 2 (bspl. Metalle wie Ag, Al, Cu), der Wellenlänge des verwendeten Lichts und der Dicke d der Lichtleiterplatte 1 so gering, dass problemlos Leiterplatten bspl. bis zum sogenannten Europakarten-Format (100 mm×160 mm) ersetzt werden können. Je nach Parameterwahl ergibt sich damit eine für die optische Signalimpulsenergie optimale Plattendicke zwischen 2 mm und 4 mm, also eine Plattendicke d, die gross ist zum Verhältnis der Wellenlänge des verwendeten Lichts. Eine Lichtleiterplatte 1 mit einer derartigen Dicke besitzt zudem eine genügende mechanische Stabilität, so dass sie in einem Gerät ohne zusätzliche Stützmechanismen eingebaut werden kann.

Als elektro-optische Wandler 4 können beliebige Wandler, beispielsweise Leuchtdioden (LED), Halbleiter-Laser oder dergleichen verwendet werden, die Licht in einem zur Nachrichtenübertragung verwendeten Wellenlängenbereich, also im Bereich vom nahen UV bis zum Infrarot abgeben. Entsprechend können die opto-elektrischen Wandler 5 beliebige Wandler sein, die eine Wandlung derartiger Lichtsignale in elektrische Signale ermöglichen; beispielsweise können als opto-elektrische Wandler 5 handelsübliche Photodioden verwendet werden. Aus Kostengründen sind dabei Planardioden bevorzugt.

Die Wandler 4 und 5 sind vorzugsweise mit den Schaltkreisen 6 und den Anschlüssen 8 in einem gemeinsamen Gehäuse integriert; natürlich ist es aber auch möglich, für die Wandler, eventuelle Parallel-Seriell-Umsetzer etc. getrennte Gehäuse zu verwenden, auf denen beispielsweise handelsübliche Chips, die als Funktionsbausteine dienen, aufgesteckt werden können.

Wenn sämtliche Funktionsbausteine, d.h. alle Bus-Teilnehmer miteinander kommunizieren sollen, müssen die einzelnen Aussparungen 3, d.h. die Koppelfenster 3 so angeordnet sein, dass sie sich nicht gegenseitig abschatten, d.h. dass auf einer beliebig verlängerten Verbindungslinie zweier Koppelfenster kein drittes Koppelfenster liegt. Dies gilt für ein- oder beidseitige Koppelfensteranordnungen.

Fig. 2 zeigt Einzelheiten der in Fig. 1 schematisch dargestellten erfindungsgemässen Schaltung. Der in Fig. 2 dargestellte Aufbau kann insbesondere dann verwendet werden, wenn für die Bus-Architektur eine Unterscheidung nach aktiven und passiven Teilnehmern beispielsweise nach DIN 66 264 vorgenommen werden soll. Ein aktiver Bus-Teilnehmer 21 weist neben einem Schaltkreis 17, beispielsweise einer CPU mit Parallelstruktur für den Daten- sowie den Adressbus einen Parallel-Seriell-Umsetzer 16 (PSU), einen Sendeverstärker 19 und einen Empfängerverstärker 20 mit einem Signalabtastungs-Schaltkreis 11 auf. Zusätzlich besitzt dieser aktive Bus-Teilnehmer auch einen Taktgenerator 12 für den Übertragungstakt 24, der über einen Taktteiler (Zähler) 23 mit festem Teilungsverhältnis 1/n den Prozessor-Systemtakt 14 generiert. Der Taktgenerator 12 liefert auch die Abtastintervalle für den Signalabtaster 11. Der Parallel-Seriell-Umsetzer 16 setzt die in den internen Registern anfallenden parallelen Datenworte in serielle Signale um und übernimmt auch die Rückumsetzung nach einer Übertragung.

Bei den passiven Bus-Teilnehmern 22, von denen im Rahmen der Adressierungsfähigkeit der aktiven Teilnehmer beliebig viele angeschlossen werden können, und die z.B. als innere Komponente einen Schreib-Lese-Speicher 18 (RAM) enthalten, werden ebenfalls jeweils ein Empfänger-Verstärker 20, eine Sende-Verstärker 19 und bei interner Parallel-Struktur, dargestellt durch den internen Parallel-Bus 15, auch eine Parallel-Seriell-Umsetzer 16 benötigt. Die Synchronität bei der Übertragung wird über eine Taktrückgewinnungsschaltung 13 sichergestellt, die aus dem übertragenen Signal den Systemtakt zurückgewinnt. Der Parallel-Seriell-Umsetzer 16 enthält auch die Adressinformation, die vor Einsatz der passiven Komponente elektrisch oder auf andere Weise programmiert werden muss.

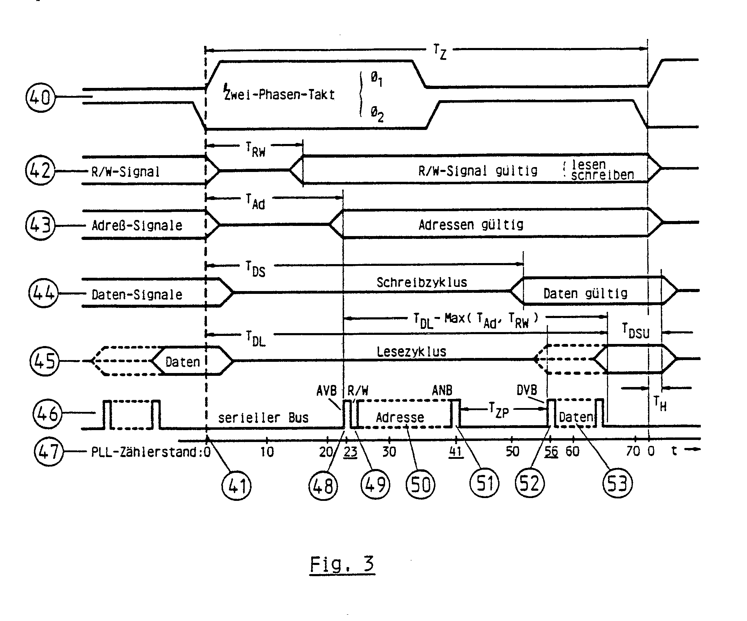

Fig. 3 zeigt ein Impuls/Zeitdiagramm der seriellen Übertragung auf dem erfindungsgemässen Optobus.

Für die serielle Übertragung von Mikroprozessor-Bus-Signalen lässt sich kein allgemein gültiges Übertragungsprotokoll angeben, da auch die zur Zeit verwendeten Parallel-Busse sehr unterschiedlich aufgebaut sind und stark an die jeweilige Prozessorarchitektur gebunden sind. Demnach soll das nachfolgend beschriebene serielle Bus-Protokoll, das für eine Mikroprozessor-Bus-Familie realisiert wurde, zu denen z.B. die Prozessoren M6800, M6809 (beide von Motorola Inc., USA) und der R6502 und verwandte Prozessoren (von MOS, Rockwell, GTE usw., USA) gehören, als ein mögliches Realisierungsbeispiel für serielle synchrone Mikroprozessor-Bus-Systeme angesehen werden. Asynchrone serielle Bus-Systeme lassen sich in ähnlicher Weise daraus ableiten.

Ausgehend von einem synchronen nichtüberlappenden Zwei-Phasen-Taktsystem 40 entsprechend Fig. 3 mit den Signalen $\varnothing_1$ und $\varnothing_2$, welches für die serielle Übertragung in 72 Teilzyklen, repräsentiert durch den PLL-Zählerstand 47, aufgeteilt wird, steht vom gemeinsamen Bezugszeitpunkt 41 ab nach einer Verweilzeit $T_{RW}$ das Richtungssignal R/W zur Verfügung, welches logisch «1» für einen nachfolgenden Lesezyklus (vom Prozessor aus gesehen) und log. «0» für einen Schreibzyklus signalisiert.

Nach einer Verweilzeit $T_{Ad}$ liegt das gültige Adresswort 43 am parallelen Adress-Bus an, so dass, beginnend mit einem Adress-Vorbit (AVB) 48, mit der Aussendung des seriellen Bus-Signals 46 frühestens von diesem Zeitpunkt an begonnen werden kann. Für dieses Beispiel wurde das Steuersignal R/W 49 mit in die Adressübertragung 50 einbezogen, die mit einem Adress-Nachbit (ANB) 51 ihren Abschluss findet und ein sogenanntes Übertragungszeitfenster belegt. Mit der Übertragung der Steuer- und Adress-Signale sichert sich der Prozessor als aktiver Bus-Teilnehmer die Kontrolle über den Bus für den laufenden Bus-Zyklus. Die passiven Bus-Teilnehmer müssen diese Signale mit den dafür vorgesehenen Einrichtungen (5, 11, 13, 16, 20) empfangen und auswerten, wobei der angesprochene Teilnehmer sich für die nachfolgende Datenübertragung bereithalten muss.

Innerhalb der zweiten Phase des Bus-Zyklusses muss im Falle einer Schreiboperation der Prozessor nach einer Verweilzeit $T_{DS}$ das Datensignal 4 bereitstellen. Dieses wird dann in einem weiteren Übertragungszeitfenster beginnend mit einem Daten-Vorbit 52 und den Daten 53 seriell übertragen. Der angesprochene passive Bus-Teilnehmer muss dieses Datum empfangen und gegebenenfalls wieder in eine parallele Form rückumwandeln (16) und entsprechend seiner Aufgabe speichern (RAM), weiterverarbeiten (z.B. Subprozessoren) oder an andere Betriebsmittel (E/A-Komponenten) ausgeben.

Im Falle einer Leseoperation muss der angesprochene passive Bus-Teilnehmer das angeforderte Datum nach einer Zugriffzeit $T_{ZP}$ nach Abschluss der Adress-Übertragung ebenfalls beginnend mit einem Daten-Vorbit 52 das serielle Datenwort 53 an den Prozessor übertragen. Vorzugsweise wird dieser Übertragungszyklus im gleichen Zeitraster abgewickelt wie bei der Schreiboperation, was ein Mitprotokollieren durch andere Bus-Teilnehmer erleichtert.

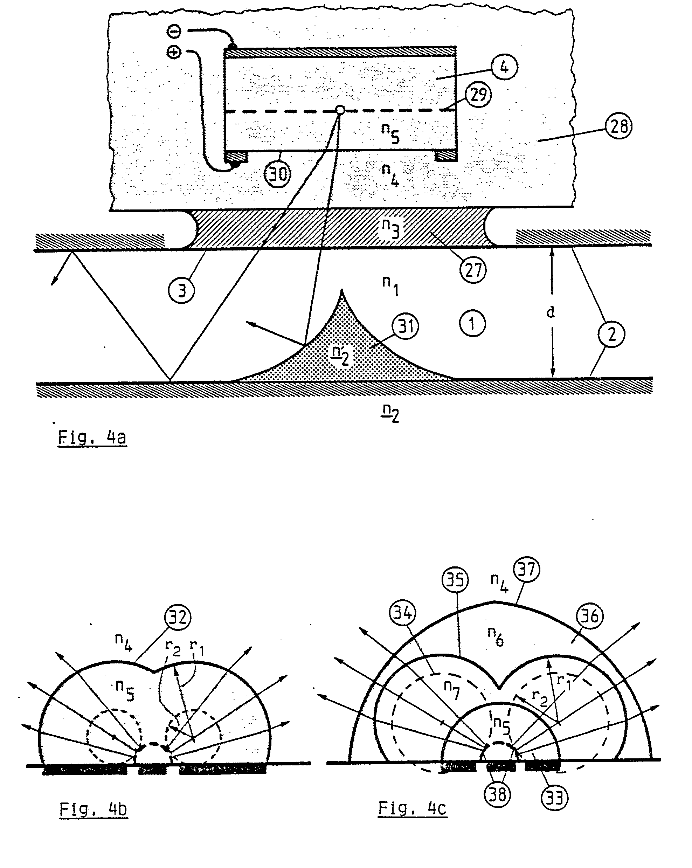

Fig. 4a zeigt eine mögliche Gestaltung der optischen Koppelanordnung für eine LED 4 als optischen Sender (elektro-optisches Wandlerelement) in vergrösserter Form. Hierbei ist an dem Koppelfenster 3 über eine Koppelzwischenschicht 27, die vorzugsweise aus einem transparenten Material (z.B. Kleber für feste oder Flüssigkeit für lösbare Verbindungen) mit einer Brechzahl $n_3=n_1$ besteht, eine eine in ein festes transparentes Material 28 (z.B. Kunstharz) mit der Brechzahl $N_4=n_1$ eingebettete planare Leuchtdiode so angeordnet, dass die Austrittsfläche 30 die in der aktiven Zone 29 generierten Lichtquanten in den Lichtleiter 1 eintreten lässt.

Mit der Wahl der Brechzahlen $n_1=n_3=n_4$ wird erreicht, dass die Ankoppelung beispielsweise gegen Verkippungen unkritisch ist und keine Transmissionsverluste an den beteiligten Grenzschichten entstehen.

Die z.Z. verfügbaren schnellen Wandler sind von ihrer physikalischen Struktur her überwiegend als ebene Strahler bzw. ebene Empfänger (Lambert-Charakteristik) mit einer kleinen aktiven Oberfläche 30 zur Anpassung an Glasfaser-Lichtwellenleiter optimiert.

Optische Sender, die sich wie Lambert-Strahler verhalten, sind aber an die Verhältnisse der Lichtleiterplatte nicht besonders angepasst, da der Anteil der Strahlungsleistung, der unter dem Teilraumwinkel abgestrahlt wird, der für die Signalübertragung den wesentlichsten Beitrag liefert, nur relativ klein ist, gemessen am Gesamtbetrag der abgestrahlten optischen Leistung.

Zur Verbesserung des Koppelungsgrades können an der, dem Koppelfenster 3 gegenüberliegenden Grenzschicht 2, innerhalb der Lichtleiterplatte kleine Koppelkegel 31 aus reflektierendem Material angeordnet werden, die eine Umlenkung der Lichtstrahlen in einen für die Übertragung günstigen Raumwinkelbereich ermöglichen.

Neben einem geringen Koppelgrad hat eine Lambert-Strahlungscharakteristik ausserdem zur Folge, dass bei der Vielzahl der möglichen Übertragungswege, zwischen optischem Sender und Empfänger verschiedener Bus-Teilnehmer, eine ungünstige Gewichtung der zur Gesamtstrahlungsleistung beitragenden Teilbeiträge mit grosser Laufzeit entsteht und damit eine starke Verbreiterung (Dispersion) der Lichtimpulsantwort im Basisband des Nutzsignals zu beobachten ist, die insbesondere bei grossen Entfernungen die Übertragungsrate begrenzt.

Der Impulsverbreiterung kann entgegengewirkt werden mit einer Verringerung des Reflexionskoeffizienten am Grenzschichtmaterial 2, d.h. durch die Wahl eines Materials mit schlechteren Reflexionseigenschaften. Dieses Verfahren lässt sich erfolgreich für kleinere Lichtleiterplatten (bis ca. 10 cm Kantenlänge) anwenden, bei grösseren Lichtleiterplatten macht sich aber die zusätzliche Dämpfung bemerkbar, die dann zu einer weiteren Verschlechterung des Koppelungsgrades bei grossen Sender-Empfänger-Entfernungen führt.

Abhilfe kann hierbei allerdings auch eine Wölbung der Austrittsfläche 30 der Emitterdiode bringen, die ausserdem noch zu einer ·erheblichen Steigerung des externen Quantenwirkungsgrades führen kann. Bei einem Halbkugelstrahler lässt sich im Vergleich zum ebenen Flächenstrahler ein mindestens zwanzig mal grösserer Anteil der im Innern des Diodenkristalls erzeugten Strahlungsleistung auskoppeln. Wegen der unspezifischen Abstrahlrichtung ist aber auch hiermit das Problem der Impulsverbreiterung nicht gelöst.

˙Eine weitere Verbesserung kann ein gerichteter Strahler schaffen, der seine überwiegende Strahlungsleistung rotationssymmetrisch in einen engen Raumwinkelbereich abstrahlt, der der Vorzugsrichtung für die Signalübertragung entspricht. Dieser lässt sich in Anlehnung an die Weierstrass-Sphäre als Weierstrass-Torus 32 entsprechend Figur 4b aufbauen, wobei sich der Aussenradius $r_1$ zum gedachten Innenradius $r_2$ wie die Brechungsindizes des Emittermaterials (für GaAlAs: $N_5 = 3,6$) zum Einbettungsmaterial ($n_4 = n_1 : 1,5 \ldots 1,8$ je nach Wahl) verhalten.

Abgesehen davon, dass sich eine dafür erforderliche asphärische Oberfläche nicht mit vertretbarem Aufwand beim derzeitigen technologischen Stand für III-V-Verbindungen herstellen liesse, wäre die Richtwirkung des Emitters auch sehr stark von eventuellen Schwankungen der Brechzahl des Einbettungsmaterials abhängig.

Dieser Nachteil lässt sich umgehen, wenn ein Halbkugelstrahler 33 (Fig. 4c) oder ein Strahler verwendet wird, der nur für die interessierenden Teilraumwinkel eine dem Kugelstrahler vergleichbare Strahlungscharakteristik besitzt und damit erheblich einfacher herzustellen ist als der Weierstrass-Torus. Um nun die gleiche Strahlbündelung zu erreichen wie dieser, muss der Strahler 33, entsprechend Figur 4c, mit einer rotationssymmetrischen Optik 35, 35, 37, versehen werden, die in Anlehnung an die Konstruktionsregeln der Weierstrass'schen Kugellinsen eine aberrationsfreie Abbildung eines Kreises im Innern 38 des Strahlers 33 durch die Wahl des Verhältnisses der Radien der Aussenkurve der Linse 35 zu einer gedachten Innenkurve 34 ermöglicht, an die die aktive Fläche 38 des Strahlers grenzt: Das Radienverhältnis wird hierzu gleich dem Brechzahlverhältnis $n_7/n_6$ der Körper 35 und 36 gewählt, die vorzugsweise aus Glas oder Kunststoff aufgebaut werden. Wird die Aussenfläche 37 des Körpers 36 so geformt, dass die Krümmungsmittelpunkte auf dem virtuellen Bild der aberrationsfrei abgebildeten aktiven Strahlerzone 38 liegen, so hat die Anordnung nach Figur 4c ausserdem den Vorteil, dass ihre Richtwirkung unabhängig von der Brechzahl des umgebenden Materials ist, sofern dieses homogen und isotrop ist.

Eine Verbesserung des Koppelungsgrades ohne wesentliche Beeinflussung des Strahlengangs lässt sich auch erreichen, wenn das Material der Lichtleiterplatte 1 einen möglichst hohen Brechungsindex aufweist, der dem des Emitter- bzw. Empfängermaterials möglichst nahe kommt. Gläser oder transparente Kunststoffe mit hohen Brechungsindizes ($n > 2$) sind aber meist sehr teuer und weisen oft einen relativ hohen Reintransmissionsfaktor auf. Eine vergleichbare Verbesserung des Koppelungsfaktors lässt sich aber auch erreichen, wenn nach Fig. 4d nur der Bereich um das Koppelfenster aus einem Material 27 mit hohem Brechungsindex, das übrige Übertragungsmedium aber einen niedrigen Brechungsindex aufweist.

Bei der Herstellung kann an den in Frage kommenden Stellen zunächst eine Aussparung vorgesehen werden, die dann anschliessend mit dem Material 27 mit höherem Brechungsindex aufgefüllt wird. Eine Beeinflussung des Strahlenverlaufs wird dann vermieden, wenn die dabei entstehende Grenzfläche senkrecht zu den Strahlen angeordnet ist, bei kleiner aktiv strahlender Fläche 29 eines Emitters, also eine Halbkugeloberfläche bildet. Durch Zwischenschaltung einer entspiegelnden Zwischenschicht können Reflexionsverluste an dieser Grenzfläche vermieden werden.

Eine andere Realisierungsmöglichkeit ergibt sich, wenn nach Beschichtung der Lichtleiterplatte 1 mit dem Grenzschichtmaterial 2 und Herausarbeiten der Koppelfenster 3 geeignete Dotierungsstoffe durch die Koppelfenster in die Lichtleiterplatte 1 derart eindringen, dass sich eine Diffusionslinse 54 mit einem kontinuierlichen Brechzahlverlauf einstellt. Bezüglich der Herstellung einer Diffusionslinse wird auf den Artikel «Stacked planar optics by the use of planar microlens array, 9th European Conference on Optical Communication (Stuttgart: Sept. 1984) Proc. S. 30, von K. Iga S. Misawa, M. Oikawa hingewiesen. Weist der Brechzahlgradient in die Richtung der Orthogonaltrajektorien, so ergibt sich auch hier keine wesentliche Beeinflussung des Strahlenverlaufs.

Soll der Strahlenverlauf jedoch so beeinflusst werden, dass der überwiegende Teil des (bei Emittern) abgestrahlten Lichts mit einem flachen Winkel auf die Grenzschicht 2 auftrifft, was sowohl zu einer Verbesserung des Koppelungsfaktors als auch zu einer Verringerung der Dispersion der Impulsantwort des Übertragungskanals führt, so sind entsprechend Fig. 4e die Linsen 55 an den Koppelfenstern 3 rotationssymmetrisch torusförmig auszulegen. Diese lassen sich nach den beiden oben genannten Verfahren sowohl mit zwei homogenen Materialien als auch nach der Diffusionsmethode unter Verwendung einer geeigneten (ringförmigen) Diffusionsmaske herstellen.

Obige Überlegungen gelten gleichermassen für optische Empfänger, jedoch stehen hierfür auch schnelle grossflächige PIN-Photodioden in Planartechnik mit genügend grossem externen Quantenwirkungsgrad zur Verfügung.

Können gerichtete optische Sender eingesetzt werden oder stehen andere, die Richtwirkung beeinflussende Koppelhilfen, z.B. Koppelkegel (31), zur Verfügung, so kann auch ein Grenzschichtmaterial 2 mit reellwertiger Brechzahl $n_2 < n_1$ (d.h. $k=0$) Verwendung finden, wenn der durch den relativen Brechzahlunterschied $n_1$, $n_2$ resultierende Grenzinzidenzwinkel kleiner ist als der Hauptabstrahlwinkel des optischen Senders. Für diesen Fall ergibt sich durch die Raumwinkelselektion des übertragenen Lichts an der Grenzschicht praktisch keine Impulsverbreiterung und keine zusätzliche Dämpfung bei grossen Sender-Empfänger-Abständen, so dass die Impulsenergie nur annähernd umgekehrt proportional mit der Entfernung abklingt. Man wird die Kombination, gerichteter Sender und reellwertiges Grenzschichtmaterial, vorzugsweise bei grossen Lichtleiterplatten einsetzen.

Die Halbleiterplättchen (Chips) hochintegrierter Schaltkreise werden heute überwiegend in Siliziumtechnik hergestellt und nur einseitig genutzt. Bei der Anwendung in optischen Bus-Systemen bietet es sich an, die Rückseite der Chips dahingehend zu nutzen, dass auf ihnen z.B. die Empfänger in Form grossflächiger PIN-Photodioden aufgebaut werden. Steht auch für direkte Halbleiter (III-V-Verbindungen) die Hochintegrationstechnik zur Verfügung, so können beide opto-elektrischen Wandler (z.B. LED und Photodiode) auf ein gemeinsames Halbleiterplättchen aufgebaut werden. Dabei bietet es sich an, auf der Unterseite die Wandler und die übrigen Schaltungsteile auf die der Lichtleiterplatte abgewandten Oberseite des Chips vorzusehen.

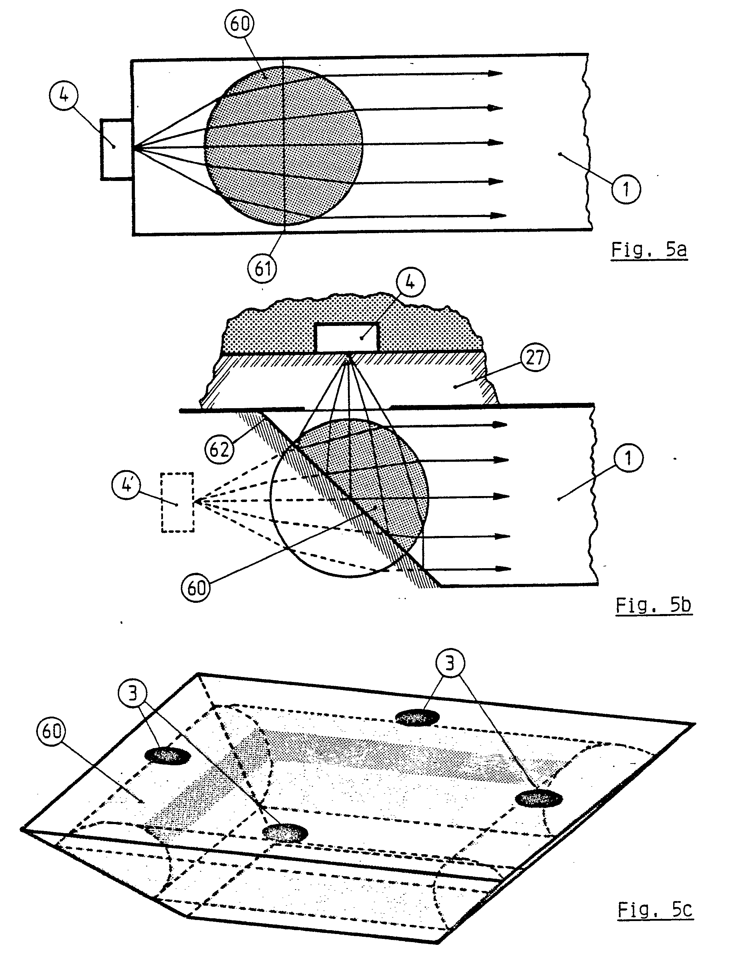

Die Fig. 5a bis 5d zeigen verschiedene Möglichkeiten, wie der Koppelungsgrad durch Verwendung spezieller Linsenformen verbessert werden kann.

Dabei zeigen die Fig. 5a bis 5c Möglichkeiten, wie der Koppelungsgrad durch Verwendung von Zylinderlinsen 60 verbessert werden kann. Fig. 5a zeigt die Realisierungsmöglichkeit mit einer aus zwei Hälften bestehenden und beispielsweise nach dem Diffusions-Verfahren hergestellten Zylinderlinse 60; die beiden Hälften werden nach der Herstellung zu einem Vollzylinder vereint, so dass sich eine Trennstelle 61 ergibt.

Den Nachteil einer solchen Trennstelle kann man umgehen, wenn man gemäss Fig. 5b die Busteilnehmer 4 bzw. 5 (nicht dargestellt) auf die Oberseite der Lichtleiterplatte 1 legt und das Licht über einen Umlenkspiegel 62 wieder in die ursprüngliche Ausbreitungsrichtung umlenkt. Die Zylinderlinse 60 muss dann nur als Halblinse ausgelegt werden, wenn die Spiegelebene durch die Linsenmittellinie gelegt wird. Ein Beobachter «innerhalb der Lichtleiterplatte 1» würde dann den virtuellen Emitter 4' an den Stirnseiten des Bussegments vermuten.

Fig. 5c zeigt eine räumliche Darstellung eines Lichtleiterplattensegments mit den Koppelfenstern und den Zylinderhalblinsen, die eine Fokussierung nur in einer Ebene vornehmen. Die Linsen können als Diffusionslinsen, Feststofflinsen oder auch als Fresnel-Linsen in die Spiegelfläche eingeprägt werden. Wird nur eine bestimmte Wellenlänge für die optischen Wandler genutzt, so können auch holographische Spiegellinsen verwendet werden, deren Herstellung zur Zeit allerdings für die kürzeren Wellenlängen noch recht aufwendig ist.

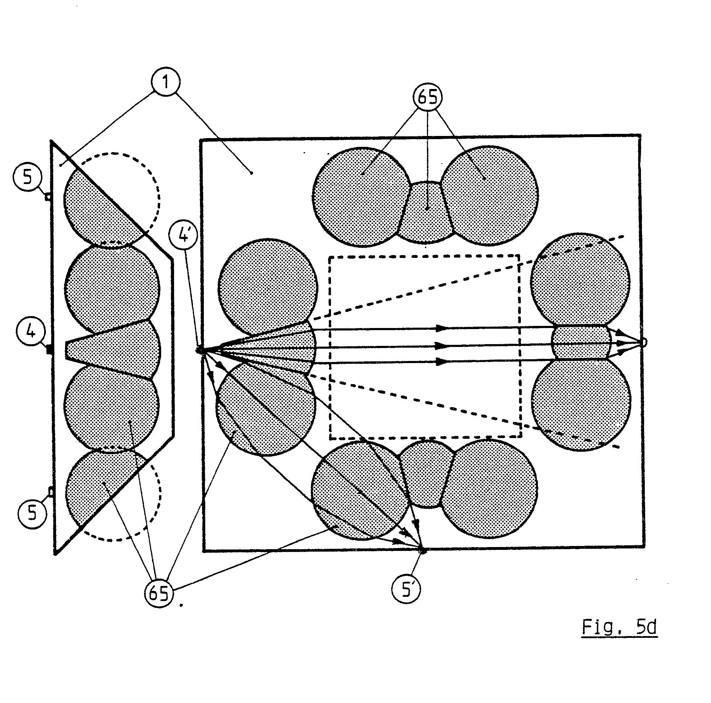

Fig. 5d zeigt eine Möglichkeit, in einem Lichtleiterplattensegment 1 die Verteilung der Strahlungsleistung auch innerhalb der Ebene, in die die optischen Komponenten selbst liegen, auf die Empfängerflächen zu bündeln. Bei dem dargestellten Ausführungsbeispiel werden vier Busteilnehmer verwendet, so dass für jeden Emitter die abgestrahlte Lichtleistung in drei Teilraumwinkel aufgeteilt und gebündelt auf die Empfängerflächen ausgerichtet wird. Hierfür bedarf es allerdings unsymmetrischer Linsenkörper 65, die die gewünschte Leistungsaufteilung vornehmen. Die Seitenansicht in Fig. 5d zeigt ein Lichtleiterplattensegment mit Spiegelschrägen für planare Busteilnehmerbestückung. Dies erfordert eine axialsymmetrische Linsenanordnung bei körperlichen Linsen (Feststofflinsen und Diffusionslinsen); durch die Verwendung von Fresnel-Linsen oder holographischen Linsen lassen sich jedoch beliebig andere Formen realisieren, so dass bei diesem Ausführungsbeispiel vorzugsweise derartige Linsenformen eingesetzt werden sollten. Aus diesem Grunde eignet sich hier besonders Kunststoff als Material für die Lichtleiterplatte 1, da sich dieser besonders einfach formen lässt.

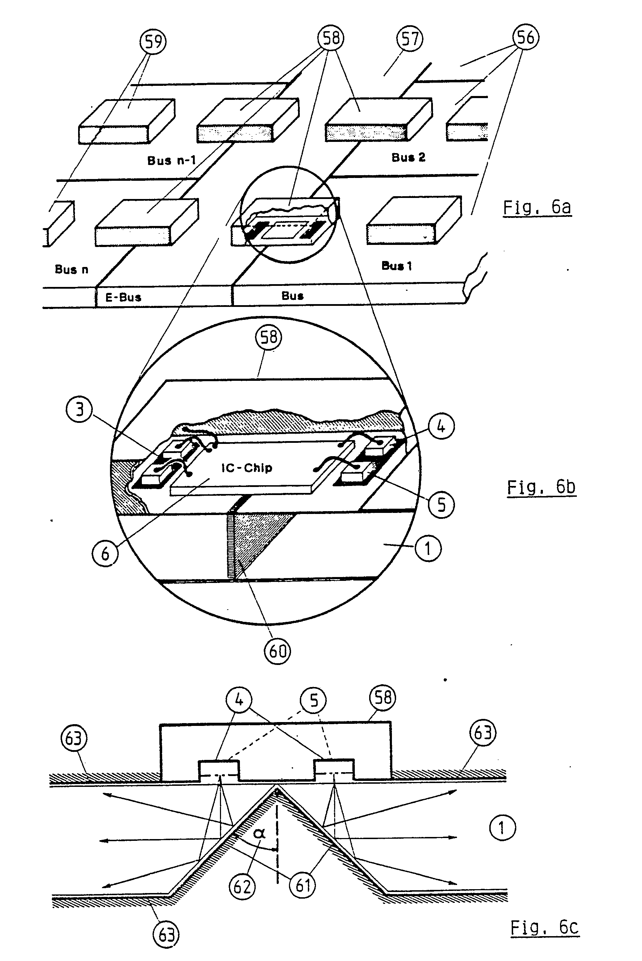

Fig. 6a bis Fig. 6c zeigen eine weitere Ausführungsform der erfindungsgemässen Schaltung mit Optobus, bei der die Lichtleiterplatte 1 in verschiedene Segmente 56, 57 etc. aufgeteilt ist. Die einzelnen Bussysteme können völlig unabhängig voneinander arbeiten, da sie optisch mit lichtundurchlässigen Trennwänden 60 voneinander isoliert sind. Die einfachen Busteilnehmer 59 sind dabei wie in Fig. 1 bzw. Fig. 2 ausgelegt. Besondere Busteilnehmer (Bus-Extender) 58 mit jeweils zwei Koppelfenster 3 stellen die Signalverbindung zwischen zwei benachbarten Bussegmenten her. Diese Busteilnehmer besitzen demnach zwei Emitter-Empfängerkombinationen 4 und 5 die von der eingebauten integrierten Schaltung 6 angesteuert werden müssen. Die Teilbussysteme können hierarchisch organisiert werden, indem nur bestimmte Extenderbusse (E-Busse) 57 die Kommunikation der übrigen Teilbusse 56 miteinander ermöglichen. Eine gleichrangige Organisation kann erreicht werden, wenn alle benachbarten Teilbusse über Bus-Extender-Teilnehmer 58 miteinander verknüpft werden.

Wird das Übertragungssystem für Vermittlungszwecke eingesetzt, werden vorzugsweise nur Bus-Extender-Teilnehmer verwendet, deren Innenschaltung zur Auswahl der Verbindungswege ausgelegt sind.

Eine Verbesserung des optischen Kopplungsfaktors kann erreicht werden, wenn die Trennstelle 61 (Fig. 6c) mit einem Neigungswinkel = 45° 62 ausgeführt ist und die Trennflächen verspiegelt sind. Die optischen Emitter 4 und ebenfalls die Empfänger 5 sind dann in der Mitte über der Spiegelschräge so anzuordnen, dass der Kopplungsfaktor zu den Empfängern bzw. Emittern der anderen Busteilnehmer optimal wird. Werden nur Bus-Extender verwendet, so kann auf eine Verspiegelung der nicht geneigten Flächen 63 verzichtet werden. Eine weitere Verbesserung des Kopplungsfaktors lässt sich durch zusätzliche Linsen nach Fig. 4 (a–e) erreichen.

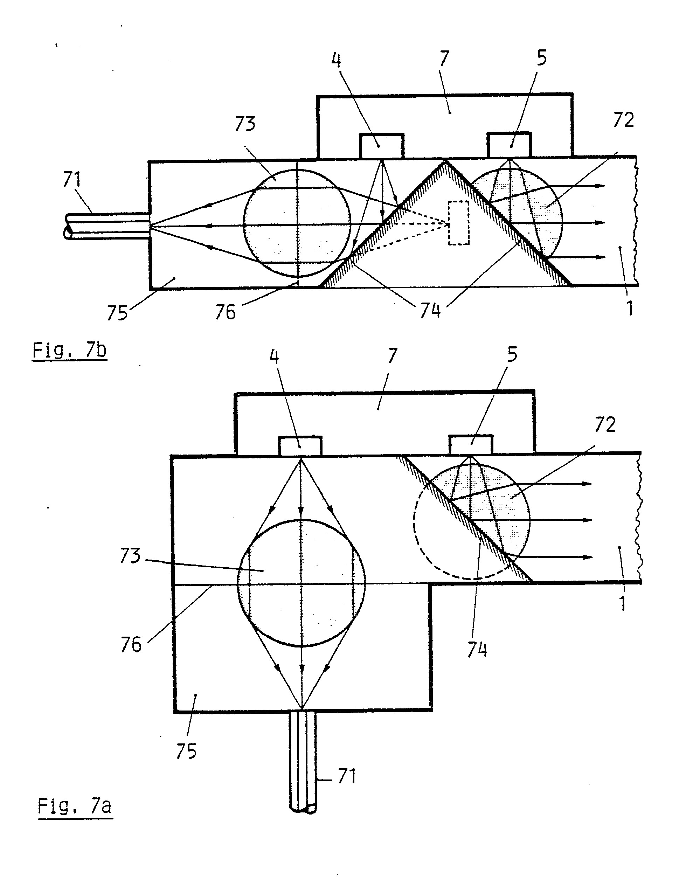

Die Fig. 7a und 7b zeigen die Ankoppelung von Glasfasern an die erfindungsgemässe Lichtleiterplatte 1. Hierdurch lassen sich entfernt liegende Koppelpunkte aber auch Endteilnehmer über Fasern 71 erreichen. Derartige Ankoppelungen lassen sich leicht mittels Diffusionslinsen 72 und 73 sowie mittels Spiegelschichten 74 erzielen. Durch spezielle Busteilnehmer 7 mit Empfängern 5 und Emittern 4 wird die Verbindung zwischen der Lichtleiterplatte 1 mit Optobus und speziellen Koppelungsstücken 75 hergestellt. Dabei ist in Fig. 7a eine seitliche und in Fig. 7b eine frontale Einkoppelung an ein Emitter-Empfänger-Modul eines Busteilnehmers 7 dargestellt. Die Diffusionslinsen sind als Kugellinsen ausgelegt, wobei sie aus zwei Teillinsen mit einer Trennschicht 76 bestehen können.

Der Preis für die serielle Bus-Übertragung ergibt sich durch die verkürzte Zugriffszeit $T_{ZP}$ gegenüber der des Parallel-Busses $T_{DL}$-Max ($T_{AD}$, $T_{RW}$), die jedoch bei Erhöhung des Übertragungstaktes und entsprechend feinerer Unterteilung des Übertragungszyklusses in mehr als 72 Einheiten vergrössert werden kann. Andererseits lässt sich aber ein PSU 16 beim heutigen Stand der Technik für eine Bus-Zyklusdauer $T_Z$ von 1000 ns und einer seriellen Übertragungsrate von 72 MBit/s mit ca. 200 TTL-Gatterfunktionen so aufbauen, dass für die internen, parallelen, passiven Teilkomponenten (z.B. RAM) eine Zugriffszeit von ca. 200 ns verbleibt. Dieser zusätzliche Aufwand für die serielle Übertragung ist gemessen an den Gatterzahlen moderner Prozessoren sehr gering.

Wird die herkömmliche parallel organisierte Bus-Treiberlogik durch entsprechende PSU-Teilsysteme 16 innerhalb der integrierten Schaltkreise ersetzt, so lassen sich durch geringfügige Modifikationen der Prozessorarchitektur insbesondere die Verweilzeiten für die Adress- und Steuersignale so vorverlegen, dass eine wesentlich grössere Zugriffszeit für die passiven Bus-Teilnehmer verbleibt.

Die Vorzüge des Optobusses gegenüber der herkömmlichen Leiterplattentechnik ergibt sich wie folgt:

1. Durch den Verzicht auf oder zumindest erheblich geringeren Bedarf an wertvollen Rohstoffen, wie Kupfer und Gold für den Kontaktapparat und den Einsatz preiswerter Rohstoffe wie z.B. Aluminium (Leiterbahnen/Kühlung, Verspiegelung) und Glas bzw. Kunststoff für die Lichtleiterplatte, lassen sich die Materialkosten drastisch verringern.

2. Für neue Rechnerkonfigurationen muss nicht jeweils ein neues Leiterplatten-Lay-Out erstellt werden, hingegen ist nur einmalig eine Koppelfensteranordnung für eine bestimmte Koppelstellenzahl zu entwickeln.

3. Durch weitgehenden Wegfall eines elektrischen Kontaktapparates kann eine erheblich dichtere Packung der Bauelemente erfolgen.

4. Mit zunehmender Wortbreite von Rechnerkomponenten wird die Verwendung optischer Übertragungstechniken auch bei den noch niedrigen externen Quantenwirkungsgraden von 3% bis 5% für derzeit verfügbare optische Emitter (LED) zu einer Verringerung der Verlustleistung im Bereich der Bus-Treiber-Logik-Elemente führen.

5. Da externe Signalleiterbahnen fehlen, können dort auch keine Störungen durch elektro-magnetische Wechselfelder auftreten. Wegen der kleinen Weglängen der noch verbleibenden Chipleiterbahnen ergeben sich nur noch sehr kleine Induktionsströme, die sich durch ein geeignetes Chip-Lay-Out zudem weitgehend kompensieren lassen. Diese Tatsache wird die Betriebssicherheit von Rechnerkomponenten bei schwierigen Umweltbedingungen verbessern helfen.

6. Werden die Koppelstellen mit steckbaren Fassungen für die Bus-Teilnehmer und lösbaren Koppelzwischenschichten ausgestattet, so können z.B. Rechnersysteme auch auf Platinen-Ebene nachträglich umkonfiguriert werden.

**Patentansprüche**

1. Schaltung mit einer als Lichtleiterplatte (1) ausgebildeten Leiterplatte, auf deren Aussenfläche ein Grenzschichtmaterial (2) aufgebracht ist, und auf der Leiterplatte angeordneten Schaltkreisen (7), von denen jeder mindestens ein elektrooptisches Wandlerelement (4), dessen Licht in die Lichtleiterplatte (1) einleitbar ist, und mindestens ein opto-elektrisches Wandlerelement (5), das Licht aus der Lichtleiterplatte empfängt, sowie eine Umsetzschaltung aufweist, die die Signale von dem jeweiligen Schaltkreis (7) an das oder die elektro-optischen Wandlerelemente anlegt und die von dem opto-elektrischen Wandlerelement empfangenen Signale an den Schaltkreis (7) anlegt, dadurch gekennzeichnet, dass das auf den Aussenflächen der Lichtleiterplatte aufgebrachte Grenzschichtmaterial (2) einen Brechungsindex aufweist, dessen Imaginärteil ungleich Null ist, dass in dem Grenzschichtmaterial zum Ein- und Auskoppeln von Licht Koppelfenster (3) vorgesehen sind, und dass zur wahlfreien Verbindung der einzelnen Schaltkreise die Umsetzschaltungen die gesendeten Signale an den jeweiligen Schaltkreis (7) adressieren.

2. Schaltung nach Anspruch 1, dadurch gekennzeichnet, dass jeder Schaltkreis (7) nur jeweils ein elektro-optisches und ein opto-elektrisches Wandlerelement aufweist, und dass die Umsetzschaltung (16, 19, 20) vom jeweiligen Schaltkreis (7) über die als Bus ausgebildete Lichtleiterplatte (1) zu sendende und in paralleler Form vorliegende Daten vor dem Anlegen an das elektro-optische Wandlerelement in serielle Signale umwandelt, und die von dem opto-elektrischen Wandlerelement empfangenen seriellen Signale in paralleler Form vorliegende Daten rückumwandelt.

3. Schaltung nach Anspruch 1 oder 2, dadurch gekennzeichnet, dass die Lichtleiterplatte (1) eine ebene Platte ist, und dass die elektro-optischen und die opto-elektrischen Wandlerelemente (4, 5) Planardioden sind, die in in dem Grenzschichtmaterial vorgesehene Aussparungen eingesetzt sind, die die Koppelfenster (3) bilden.

4. Schaltung nach Anspruch 3, dadurch gekennzeichnet, dass die Planardioden in ein transparentes Material eingebettet sind, dessen Brechungsindex ($n_2$) gleich dem ($n_1$) der Lichtleiterplatte ist.

5. Schaltung nach einem der Ansprüche 3 oder 4, dadurch gekennzeichnet, dass zur Verbesserung des Wirkungsgrades der Ein- und Auskoppelung von Licht auf der dem jeweiligen Koppelfenster (3) gegenüberliegenden Seite der Lichtleiterplatte (1) eine Einprägung und/oder eine Spiegelschicht vorgesehen ist.

6. Schaltung nach einem der Ansprüche 3 oder 4, dadurch gekennzeichnet, dass zur Verbesserung des Wirkungsgrades der Ein- und Auskoppelung von Licht auf der dem jeweiligen Koppelfenster (3) gegenüberliegenden Seite der Lichtleiterplatte (1) ein kegelförmiger Bereich (31) vorgesehen ist, dessen reellwertiger Brechungsindex ($n'_2$) kleiner als der Brechungsindex ($n_1$) der Lichtleiterplatte ist.

7. Schaltung nach einem der Ansprüche 1 bis 4, dadurch gekennzeichnet, dass unterhalb der Koppelfenster Bereiche mit einem von dem Brechungsindex der Lichtleiterplatte abweichenden Brechungsindex vorgesehen sind, deren Begrenzungsflächen das aus- und eingekoppelte Licht bündeln.

8. Schaltung nach Anspruch 7, dadurch gekennzeichnet, dass Diffusionslinsen die Bereiche bilden.

9. Schaltung nach Anspruch 7, dadurch gekennzeichnet, dass Fresnellinsen die Bereiche bilden.

10. Schaltung nach Anspruch 7, dadurch gekennzeichnet, dass holographische Linsen die Bereiche bilden.

11. Schaltung nach einem der Ansprüche 7 bis 10, dadurch gekennzeichnet, dass die Begrenzungsflächen der Bereiche derart allgemein asphärisch sind, dass das eingekoppelte Licht in bestimmte Richtungen gebündelt wird.

12. Schaltung nach einem der Ansprüche 1 bis 11, dadurch gekennzeichnet, dass zur Verbindung der Lichtleiterplatte mit anderen Lichtleiterplatten, Endgeräten etc. Multimode-Glasfaserkabel (71) vorgesehen sind.

13. Schaltung nach Anspruch 12, dadurch gekennzeichnet, dass zum Anschluss der Glasfaserkabel Anschlusselemente mit mindestens zwei opto-elektrischen und elektrisch-optischen Wandlerpaaren dienen, von denen ein Wandlerpaar auf einem Koppelfenster aufsetzbar ist, und das andere Wandlerpaar der Glasfaser zugeordnet ist.

14. Schaltung nach einem der Ansprüche 1 bis 13, dadurch gekennzeichnet, dass zur Versorgung der einzelnen Schaltkreise mit elektrischer Energie elektrische Leiter (9) auf der Lichtleiterplatte aufgebracht sind.

15. Schaltung nach einem der Ansprüche 1 bis 14, dadurch gekennzeichnet, dass die Verlustwärme der Schaltkreise über die Leiter (9) abführbar ist.

16. Schaltung nach einem der Ansprüche 1 bis 15, dadurch gekennzeichnet, dass die elektro-optischen und die opto-elektrischen Wandler sowie die Umsetzschaltung in das Gehäuse der Schaltkreise integriert sind.

17. Schaltung nach Anspruch 16, dadurch gekennzeichnet, dass die elektro-optischen und die opto-elektrischen Wandler sich auf der Rückseite des Schaltkreis-Chips befinden.

18. Schaltung nach Anspruch 17, dadurch gekennzeichnet, dass mechanische Halterungen das Abnehmen und Austauschen der Schaltkreise erlauben.

**Revendications**

1. Montage comprenant une carte imprimée sous forme d'une carte imprimée aux fibres optiques (1), sur la face extérieure de laquelle une matière de couche limite (2) est apportée, et comprenant des circuits (7) disposés sur ladite carte imprimée, dont chacun comprend au moins un élément convertisseur électro-optique (4) à introduire son faisceau lumineux dans ladite carte imprimée aux fibres optiques (1), et au moins un élément convertisseur opto-électrique (5) à recevoir de la lumière de ladite carte imprimée aux fibres optiques, ainsi qu'un circuit convertisseur pour appliquer les signaux d'un des circuits (7) audit ou auxdits éléments convertisseurs électro-optiques et pour l'application des signaux reçus dudit élément opto-électrique audit circuit (7), caractérisé en ce que ladite matière de couche limite (2) apportée sur les faces extérieurs de ladite carte imprimée aux fibres optiques a un indice de réfraction dont la partie imaginaire est inégale à zéro, que des fenêtres de couplage (3) sont pourvues dans ladite matière de couche limite afin d'alimenter et de sortir de la lumière, et que les circuits convertisseurs adressent les signaux transmis au circuit respectif (7) pour la connexion aléatoire des circuits individuels.

2. Montage selon la revendication 1, caractérisé en ce que chaque circuit (7) ne comprend qu'un élément convertisseur électro-optique et un élément convertisseur opto-électrique, et que le circuit convertisseur (16, 19, 20) convertit les informations présentes sous forme de données parallèles, qui sont à transmettre dudit circuit (7) par ladite carte imprimée aux fibres optiques (1) sous forme d'un bus, dans des signaux sériels avant leur application audit élément convertisseur électro-optique, et qui convertit en inverse les signaux sériels reçus dudit élément convertisseur opto-électrique dans des informations présentes sous forme de données parallèles.

3. Montage selon la revendication 1 ou 2, caractérisé en ce que ladite carte imprimée aux fibres optiques (1) est une plaque plane, et que les éléments convertisseurs électro-optiques et opto-électriques (4, 5) sont des diodes planares fichées dans des évidements pourvus dans ladite matière de couche limite afin de former lesdites fenêtres de couplage (3).

4. Montage selon la revendication 3, caractérisé en ce que les diodes planares sont encastrées dans une matière transparente dont l'indice de réfraction ($n_2$) est égal à l'indice ($n_1$) de ladite carte imprimée aux fibres optiques.

5. Montage selon quelconque des revendications 3 ou 4, caractérisé en ce qu'une dépression et/ou une couche spéculaire est pourvue dans la face de ladite carte imprimée aux fibres optiques (1), qui est à l'opposé de la fenêtre de couplage (3) respective, afin d'améliorer le rendement de la modulation et la sortie de la lumière.

6. Montage selon quelconque des revendications 3 ou 4, caractérisé en ce qu'une zone conique (31) est pourvue dans la surface de ladite carte imprimée aux fibres optiques (1),qui est à l'opposé de la fenêtre de couplage (3) respective, afin d'améliorer le rendement de la modulation et la sortie de la lumière, l'indice de réfraction ($n'_2$) d'une valeur réelle étant plus petit que l'indice de réfraction ($n_1$) de ladite carte imprimée aux fibres optiques.

7. Montage selon quelconque des revendications 1 à 4, caractérisé en ce qu'au dessous des fenêtres de couplage sont pourvues des zones à un indice de réfraction s'écartant de l'indice de réfraction de ladite carte imprimée aux fibres optiques, les périphéries desdites zones focalisant la lumière sortante et modulée.

8. Montage selon la revendication 7, caractérisé en ce que des lentilles de diffusion forment lesdites zones.

9. Montage selon la revendication 7, caractérisé en ce que des lentilles en échelon de Fresnel forment lesdites zones.

10. Montage selon la revendication 7, caractérisé en ce que des lentilles holographiques forment lesdites zones.

11. Montage selon quelconque des revendications 7 à 10, caractérisé en ce que les peripheries desdites zones sont non-sphériques en général d'une manière que la lumière modulée soit focalisée dans des directions définies.

12. Montage selon quelconque des revendications 1 à 11, caractérisé en ce que des câbles à fibres de verre multimode (71) sont pourvus pour la connexion de ladite carte imprimée aux fibres optiques à des autres cartes imprimées aux fibres optiques, des postes terminaux, etc.

13. Montage selon la revendication 12, caractérisé en ce que des éléments de raccord à au moins deux paires de convertisseurs opto-électriques et électro-optiques sont pourvus pour le raccord d'un câble à fibres de verre, dont une paire de convertisseurs est apte à s'empiler sur une fenêtre de couplage, pendant que l'autre paire de convertisseurs est associée aux fibres de verre.

14. Montage selon quelconque des revendications 1 à 13, caractérisé en ce que des conducteurs électriques (9) sont apportés sur ladite carte imprimée aux fibres optiques pour l'alimentation des circuits en énergie électrique.

15. Montage selon quelconque des revendications 1 à 14, caractérisé en ce qu'on peut enlever la chaleur dissipée des circuits par lesdits conducteurs (9).

16. Montage selon quelconque des revendications 1 à 15, caractérisé en ce que lesdits convertisseurs électro-optiques et opto-électriques ainsi que le circuit convertisseur sont intégrés dans l'enveloppe des circuits.

17. Montage selon la revendication 16, caractérisé en ce que lesdits convertisseurs électro-optiques et opto-électriques se trouvent à la face arrière du chip portant le montage.

18. Montage selon la revendication 17, caractérisé en ce que des attaches permettent le démontage et le remplacement des circuits.

**Claims**

1. Circuit assembly comprising a circuit board in the form of an optical-fibre circuit board (1) with a boundary layer material (2) applied on its outside surface, and comprising circuits (7) arranged on said circuit board, each of said circuits being provided with at least one electro-optical converter element (4), whose light output can be introduced into said optical-fibre circuit board (1), and at least one opto-electrical converter element (5) to receive light from said optical-fibre circuit board, as well as a converter circuit to apply the output signals from the respective circuit (7) to the said electro-optical converter element(s) and to apply the signals received from said opto-electrical converter element to said circuit (7), characterized in that the boundary layer material (2) applied to the outside surfaces of said optical-fibre circuit board has a refractive index whose imaginary share is not zero; and furthermore that in said boundary layer material coupling apertures (3) are provided for light input and output, and that finally the converter circuits address the transmitted signals to the respective circuit (7) for optional connection of the individual circuits.

2. Circuit assembly according to Claim 1, characterized in that each circuit (7) comprises one electro-optical and one opto-electrical converter element respectively, and that said converter circuit (16, 19, 20) converts the data to be transmitted from the respective circuit (7) via the bus-forming optical-fibre circuit board (1) and available in a parallel form, into serial signals prior to application to said electro-optical converter element, and re-converts the serial signals received from said opto-electrical converter element into data available in a parallel form.

3. Circuit assembly according to Calim 1 or 2, characterized in that said optical-fibre circuit board (1) is a planar board, and that said electro-optical and said opto-electrical converter elements (4, 5) are planar diodes which are inserted into recesses forming said coupling apertures (3) and provided in said boundary layer material.

4. Circuit assembly according to Calim 3, characterized in that said planar diodes are embedded into a transparent material whose refractive index ($n_2$) equals the index ($n_1$) of said optical-fibre circuit board.

5. Circuit assembly according to any of Calims 3 or 4, characterized in that an impression and/or a reflector coating is provided on the side of said optical-fibre circuit board (1) opposite the respective coupling aperture (3) to improve the light input and output efficiency.

6. Circuit assembly according to any of Claims 3 or 4, characterized in that a conical area (31) is provided on the side of said optical-fibre circuit board opposite the respective coupling aperture (3) to improve the light input and output efficiency, the refractive index ($n'_2$) of real value of said area being smaller than the refractive index ($n_1$) of said optical-fibre circuit board.

7. Circuit assembly according to any of Claims 1 through 4, characterized in that areas of a refractive index other than that of said optical-fibre circuit board are provided below said coupling apertures, the peripheral surfaces of said areas focussing the output and input light beam.

8. Circuit assembly according to Claim 7, characterized in that diffusion lenses form said areas.

9. Circuit assembly according to Claim 7, characterized in that Fresnel-type lenses form said areas.

10. Circuit assembly according to Claim 7, characterized in that holographic lenses form said areas.

11. Circuit assembly according to any of Claims 7 through 10, characterized in that the peripheral surfaces of the areas are generally aspherical so as to focus the input light into defined directions.

12. Circuit assembly according to any of Claims 1 through 11, characterized in that multimode glass fibre cables (71) are provided for interconnection of the optical-fibre circuit board with other optical-fibre circuit boards, terminal units, etc.

13. Circuit assembly according to Claim 12, characterized in that connector elements with at least two opto-electrical and electro-optical converter pairs serve to connect said glass fibre cables, one of said pairs of converters being suited for mounting on a coupling aperture while the other pair of converters in associated with the glass fibre.

14. Circuit assembly according to any of Claims 1 through 13, characterized in that electrical conductors (9) are mounted on said optical-fibre circuit board to supply the individual circuits with electrical energy.

15. Circuit assembly according to any of Claims 1 through 14, characterized in that the heat due to energy loss of the circuits can be carried off via the said conductors (9).

16. Circuit assembly according to any of Claims 1 through 15, characterized in that said electro-optical and said opto-electrical converters as well as said converter circuit are integrated into the casing of said circuits.

17. Circuit assembly according to Claim 16, characterized in that said electro-optical and said opto-electrical converters are located on the rear side of the circuit chip.

18. Circuit assembly according to Claim 17, characterized in that mechanical supports permit the removal and exchange of the circuits.

1/8

Fig. 1

Fig. 2

$T_Z$

(40) Zwei-Phasen-Takt $\emptyset_1$ $\emptyset_2$

(42) R/W-Signal $T_{RW}$ R/W-Signal gültig { lesen schreiben

(43) Adreß-Signale $T_{Ad}$ Adressen gültig

(44) Daten-Signale $T_{DS}$ Schreibzyklus Daten gültig

$T_{DL} - Max(T_{Ad}, T_{RW})$ $T_{DSU}$

(45) Daten $T_{DL}$ Lesezyklus

AVB R/W ANB DVB

(46) serieller Bus Adresse $T_{ZP}$ Daten $T_H$

(47) PLL-Zählerstand: 0 10 20 23 30 41 50 56 60 70 0 t →

(41) (48) (49) (50) (51) (52) (53)

Fig. 3

15

3 / 8

Fig. 4a

Fig. 4b

Fig. 4c

Fig. 5a

Fig. 5b

Fig. 5c

Fig. 5d

Fig. 6a

Fig. 6b

Fig. 6c

Fig. 7b

Fig. 7a